(19) Europäisches Patentamt
European Patent Office
Office européen des brevets

(11) Veröffentlichungsnummer : **0 017 112**
**B1**

(12) # EUROPÄISCHE PATENTSCHRIFT

(45) Veröffentlichungstag der Patentschrift : **13.10.82**

(51) Int. Cl.³ : **C 08 G 69/44**, C 09 J 3/16

(21) Anmeldenummer : **80101521.5**

(22) Anmeldetag : **22.03.80**

(54) **Estermodifizierte Polyamide und ihre Verwendung als Schmelzkleber.**

(30) Priorität : **04.04.79 DE 2913460**

(43) Veröffentlichungstag der Anmeldung : **15.10.80 (Patentblatt 80/21)**

(45) Bekanntmachung des Hinweises auf die Patenterteilung : **13.10.82 Patentblatt 82/41**

(84) Benannte Vertragsstaaten : **BE DE FR GB IT NL**

(56) Entgegenhaltungen :
**DD A 87 888**
**DE A1 2 542 467**

(73) Patentinhaber : **BAYER AG**
**Zentralbereich Patente, Marken und Lizenzen**
**D-5090 Leverkusen 1, Bayerwerk (DE)**

(72) Erfinder : **Meyer, Rolf-Volker, Dr.**
**Buchheimer Strasse 23**
**D-4150 Krefeld (DE)**
Erfinder : **Hohmann, Gerhard, Dr.**
**An der Steinrütsch 35**
**D-5090 Leverkusen 1 (DE)**
Erfinder : **Rudolph, Hans, Dr.**
**Haydnstrasse 9**
**D-4150 Krefeld (DE)**
Erfinder : **Dhein, Rolf, Dr.**
**Deswatinesstrasse 30**
**D-4150 Krefeld (DE)**
Erfinder : **Dollhausen, Manfred, Dr.**
**Herzogenfeld 21**
**D-5068 Odenthal (DE)**

**EP 0 017 112 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

# Estermodifizierte Polyamide und ihre Verwendung als Schmelzkleber

Gegenstand der Erfindung sind estermodifizierte Polyamide sowie deren Verwendung als Schmelzkleber.

Verklebungen werden meist mit Hilfe von lösungsmittelhaltigen Klebern oder mit sogenannten Polymerisationsklebern durchgeführt. In beiden Fällen ist eine gewisse « offene » Zeit zur Abdunstung des Lösungsmittels bzw. der Polymerisation erforderlich, bis die Verklebung ihre volle Stärke erreicht hat.

Moderne zeitsparende Arbeitstechniken erfordern eine möglichst kurze Abbindezeit der Klebung, die durch den Einsatz von Schmelzklebstoffen in vielen Fällen erreicht werden kann.

Als Schmelzkleber geeignet sind z.B. thermoplastische kunststoffe verschiedener Art, wie Hochdruck-Polyethylen, Niederdruck-Polyethylen, Polyester und auch Copolyamide, die je nach dem gewünschten Einsatzgebiet ausgewählt und in Form von Pulvern, Pasten oder Schmelzen auf die zu verklebenden Gegenstände und Materialien aufgebracht werden.

Zur Verklebung von Textilien werden vorzugsweise pulverförmige Schmelzklebstoffe aufgebracht, die durch Heißpressen oder durch einen Bügelvorgang die Verklebung bewirken.

In der Schuhindustrie werden, insbesondere zum Spitzen- und Fersenzwicken, die dafür verwendeten Schmelzklebstoffe als Schmelze aufgebracht, die beim Abkühlen einer kurzzeitigen Druckbelastung unterworfen wird und eine sofortige, dauerhafte Verklebung bewirken muß.

Für diesen Einsatzbereich werden vorzugsweise Schmelzklebrohstoffe auf Basis von thermoplastischen Polyestern und Polyamidharzen verwendet.

Die prinzipiell geeigneten Produkte auf Polyesterbasis haben allgemein den Nachteil, daß sie bei Temperaturen über 200 °C verarbeitet werden müssen und zudem eine nur wenig elastische Verklebung ermöglichen, die unter Knickbelastung leicht brechen kann.

Polyamidharze auf Basis von Polymerfettsäuren und Diaminen sind z.B. bekannt aus der US-Patentschrift 2 886 543. Die dort beschriebenen Polyamide aus polymeren Fettsäuren und Gemischen aus Alkylendiaminen und Polyalkylenpolyaminen haben jedoch mangelnde Kohäsion und sind zudem bei Zimmertemperatur oberflächlich klebrig.

Aus der US-PS 2 450 940 sind Polyamidharze bekannt, die aus Gemischen von Polymerfettsäuren und anderen mehrwertigen Säuren sowie 1,2-Diaminoethan hergestellt sind. Diese Harze weisen zwar eine gute Zugfestigkeit, aber praktisch keine Dehnung auf und sind ohne weitere elastifizierende Zusätze als Klebstoffrohstoffe weitgehend unbrauchbar.

Ein genereller Nachteil dieser Polyamidharze ist der ungenügende Reinheitsgrad der technischen Dimerfettsäuren, die durch das Herstellverfahren bedingte hohe Anteile an Monomer- und Trimerfettsäuren enthalten.

Erst durch Verwendung von Polymerfettsäuren mit einem Gehalt an Dimerfettsäuren von über 90 %, vorzugsweise von über 95 %, lassen sich Produkte mit befriedigender Elastizität und Klebefestigkeit herstellen, wenn zusätzlich gewährleistet ist, daß die Verunreinigungen an Monomer- und Trimerfettsäuren in definierten Verhältnissen vorliegen (DE-OS 1 520 933, DE-AS 1 594 008).

So verursacht ein zu hoher Gehalt an Trimerfettsäuren leicht eine zu hohe Schmelzviskosität bzw. sogar Gelierung, ein zu hoher Gehalt an Monomerfettsäure dagegen Produkte, die spröde und unbiegsam sind.

Ein weiterer Nachteil dieser Polyamidharze ist die Tatsache, daß sie bei den erforderlichen Verarbeitungstemperaturen von bis zu 200 °C im Kontakt mit Luft zu Viskositätserhöhung und zum Nachdunkeln neigen (Coating, *8*, 218, 1971).

Die obengenannten Nachteile gelten analog für die in der DE-OS 1 520 002 beschriebenen Polyesteramide, die durch Mitverwendung von Alkanolaminen erhalten werden.

In der DE-OS 2 542 467 werden Polyesteramide aus Lactamen, primären Diaminen, mehrwertigen Alkoholen mit 2-12 C-Atomen und Dicarbonsäuren beschrieben, die als Schmelzkleber verwendet werden können, jedoch meist für eine Verarbeitung aus der Schmelze zu hohe Erweichungspunkte haben und/oder zu wenig elastisch sind.

Im allgemeinen genügen lediglich aus Laurinlactam als Hauptkomponente unter Mitverwendung von Dodecandicarbonsäure oder Dodecandiol hergestellte Produkte bezüglich Elastizität und Verarbeitbarkeit höheren Anforderungen. Nachteilig ist neben der schwierigen Zugänglichkeit dieser Ausgangsprodukte insbesondere das zweistufige Herstellungsverfahren für diese Polyesteramide, wobei in der ersten Stufe unter Druck und in der zweiten Stufe unter Vakuum gearbeitet werden muß.

Aus der DDR-Patentschrift 87 888 sind aus Caprolactam, $C_6$-$C_{12}$-Dicarbonsäuren und bestimmten Polyetheralkoholen hergestellte Polyesteramide als wanderungsbeständige Weichmacher für Polyamide bekannt. Als Schmelzkleber sind diese pastenförmigen Produkte jedoch nicht geeignet, da sie nicht rieselfähig sind, die Abbindezeit viel zu lang, und sowohl die Elastizität als auch die Klebefähigkeit ungenügend ist.

Überraschend wurde nun gefunden, daß estermodifizierte Polyamide aus Caprolactam, $C_6$-$C_{10}$-Dicarbonsäuren, primären $C_6$-$C_{25}$-Diaminen und Polyalkylenglykolen hochwertige Schmelzkleber darstellen, die die obengenannten Nachteile nicht aufweisen.

Gegenstand der Erfindung sind estermodifizierte Polyamide, die 50-80 Gew.-% an

$-HN-(CH_2)_5-CO-$Einheiten enthalten, erhalten durch Umsetzung von

I. 50-80 Gew.-% ε-Caprolactam und
II. 20-50 Gew.-% eines Gemisches aus

a) aliphatischen oder aromatischen $C_6$-$C_{10}$-Dicarbonsäuren,
b) primären aliphatischen und/oder cycloaliphatischen $C_6$-$C_{25}$-Diaminen und
c) Polyalkylenglykolen mit einem Molgewicht von 200 bis 1 000,

wobei die Summe von I und II 100 Gew.-% beträgt und, bezogen auf die Komponente a, 0,5-0,9 Äquivalente der Komponente b und 0,1-0,5 Äquivalente der Komponente c eingesetzt werden und die Summe der Komponenten b und c 0,95-1,05 Äquivalente beträgt.

Als Dicarbonsäurekomponente sind aliphatische und aromatische $C_6$-$C_{10}$-Dicarbonsäuren geeignet, wie Adipinsäure, Azelainsäure, Isophthalsäure und Terephthalsäure oder deren Gemische. Vorzugsweise wird Isophthalsäure, die bis zu 10 Gew.-% an Terephthalsäure enthalten kann, oder Adipinsäure eingesetzt.

Als Polyalkylenglykole eignen sich z.B. Polyethylenglykole, Polypropylenglykole sowie aus Ethylenoxid und Propylenoxid erhaltene Polyalkylenglykole mit Molgewichten von 200-1 000, vorzugsweise von 200-600.

Als Diaminkomponente eignen sich primäre aliphatische und cycloaliphatische $C_6$-$C_{25}$-Diamine, wie Hexamethylendiamin, Trimethylhexamethylendiamine, Isophorondiamin und Zweikerndiamine der Formel (1)

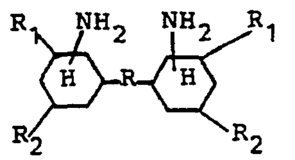

(1)

in der R ein Alkylen- oder Alkylidenrest mit 1 bis 4 C-Atomen und vorzugsweise

$$-CH_2- \text{ oder } -\overset{CH_3}{\underset{CH_3}{C}}-$$

ist und $R_1$ und $R_2$ gleich oder verschieden sind und H oder $C_1$-$C_3$-Alkyl und vorzugsweise H oder $CH_3$ bedeuten.

Beispiele für derartige Zweikerndiamine sind 4,4'-Diamino-3,3'-dimethyl-dicyclohexylmethan, 4,4'-Diamino-3,3',5,5'-tetramethyl-dicyclohexylmethan, 4,4'-Diamino-dicyclohexylpropan und vorzugsweise 4,4'-Diamino-dicyclohexylmethan und Diaminodicyclohexylmethan-Isomerengemische, die zu mindestens 75 % aus dem 4,4'-Isomeren bestehen. Selbstverständlich sind auch Gemische der genannten Diamine geeignet.

Besonders bevorzugt werden Hexamethylendiamin und/oder Hydrierungsprodukte technischer Diaminodiphenylmethan-Gemische verwendet, die herstellungsbedingt bis zu 10 Mol-% an Dreikerntriaminen der Formel (2) enthalten können

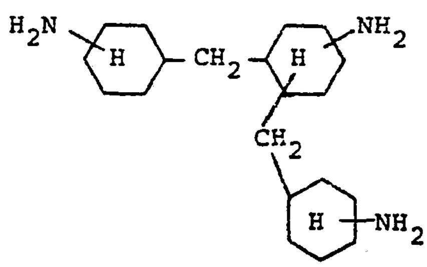

(2)

Bevorzugt sind Polyesteramide gemäß vorliegender Erfindung aus

I. 55-70 Gew.-% ε-Caprolactam und
II. 30-45 Gew.-% eines Gemisches aus

a) Isophthalsäure und/oder Adipinsäure,
b) Hexamethylendiamin und/oder hydrierten technischen Diaminodiphenylmethan-Gemischen, die mindestens 75 % 4,4'-Diaminodicyclohexylmethane enthalten und bis zu 10 Mol-% an Dreikerntriaminen der Formel (I) enthalten können und
c) Polyethylenglykolen mit einem Molgewicht von 200-600.

Besonders bevorzugt sind Polyesteramide aus

I. 60-70 Gew.-% ε-Caprolactam und
II. 30-40 Gew.-% eines Gemisches aus

a) 1 Äquivalent Isophthalsäure,
b) 0,5-0,9 Äquivalenten eines Diaminodicyclohexylmethan-Gemisches, das mindestens 75 % der 4,4'-Isomeren enthält und
c) 0,1-0,5 Äquivalenten Polyethylenglykol mit einem Molgewicht von 200-400

wobei die Summe von b) und c) 1 Äquivalent beträgt.

Durch Mitverwendung von bis zu 10 Mol-% der Dreikerntriamine der Formel (I) kann eine optimale Rieselfähigkeit der Polyesteramide erzielt werden. Zu diesem Zweck können auch geeignete trifunktionelle Alkohole, wie Trimethylolpropan und Glycerin, bei der Polykondensation mit eingesetzt werden.

Die erfindungsgemäßen Produkte haben Säurezahlen von 5-20, vorzugsweise von 8-15, und relative Viskositäten (1 Gew.-%ige Lösung in m-Kresol bei 25 °C) von 1,4-2,2, vorzugsweise von 1,6-2,0. Ihr Erweichungsbereich liegt zwischen 100 und 180 °C, vorzugsweise zwischen 120 und 160 °C, ihre Schmelzviskosität beträgt bei 200 °C 0,5 bis 100 Pa.s, vorzugsweise 1 bis 50 Pa.s.

Enthalten die Polyesteramide einen höheren als den erfindungsgemäßen Anteil an eingebauten $-CO(CH_2)_5NH$-Gruppen, so steigt die Schmelzviskosität unerwünscht stark an, bei geringerem Anteil sind die Produkte auch bei Temperaturen unter 100 °C an der Oberfläche klebrig.

Ohne die Polyglykolkomponente erhält man hochviskose und hochschmelzende Produkte, die für einen Einsatz als Schmelzklebrohstoff ebenfalls ungeeignet sind. Ohne die Diaminkomponente erhält man, wie in der DDR-Patentschrift 87 888 beschrieben, weiche, klebrige Produkte, die nicht rieselfähig sind und infolge mangelnder Erstarrungsneigung keinerlei Klebefestigkeit aufweisen.

Die Herstellung der erfindungsgemäßen Polyesteramide kann in an sich bekannter Weise in Autoklaven durch Kondensation der Ausgangskomponenten erfolgen. Das Monomergemisch wird dazu allmählich auf 200-300 °C, vorzugsweise auf 220-250 °C, aufgeheizt und bei diesem Temperaturbereich unter Stickstoffatmosphäre bis zum Erreichen des gewünschten Molgewichts polykondensiert. Der Fortgang der Reaktion kann durch Bestimmung der Säurezahl leicht verfolgt werden. Nach beendeter Polykondensation wird die Polymerschmelze je nach Produktzusammensetzung auf 120-200 °C abgekühlt, aus dem Autoklaven mittels Stickstoffüberdruck als Band oder als Strang ausgepreßt und in geeigneter Weise zerkleinert, z.B. zerhackt, geschnitten oder granuliert.

Das erhaltene rieselfähige Produkt kann durch Extraktion mit Wasser von nicht umgesetztem Caprolactam befreit werden, ohne daß die gute Elastizität der Polyesteramide beeinträchtigt wird. Zusätzlich zeichnen sich die durch Extraktion des monomeren Caprolactams erhältlichen Produkte durch erhöhte Viskositätsstabilität und nochmals verkürzte Abbindezeit aus.

Die erfindungsgemäßen Produkte können übliche Zusatzstoffe enthalten, wie z.B. Pigmente, Mattierungsmittel oder Stabilisatoren. Diese Zusatzstoffe können vor, während oder nach der Polykondensation eingearbeitet werden.

Die erfindungsgemäßen estermodifizierten Polyamide können zur Elastifizierung von anderen Thermoplasten Verwendung finden, sind jedoch besonders als hochwertige Schmelzklebrohstoffe, vorzugsweise im Bereich der Schuhindustrie geeignet.

Die Erfindung ist nachstehend anhand von Beispielen näher erläutert. Die angegebenen Teile und Prozentsätze beziehen sich stets auf das Gewicht.

## Beispiel 1

7,8 kg ε-Caprolactam, 2,21 kg (13,3 Mol) Isophthalsäure, 1,37 kg (3,43 Mol) Polyethylenglykol (Molgewicht 400) und 1,16 kg (10,0 Mol) Hexamethylendiamin werden in einem geschlossenen Autoklaven unter $N_2$-Atmosphäre auf 200 °C erhitzt und 2 Stunden bei 200 °C vorkondensiert. Nach vorsichtigem Entspannen wird auf 250 °C aufgeheizt und noch 5 Stunden auskondensiert (Säurezahl des Produkts : 14 mg KOH/g, gemessen in Dimethylformamid). Das Produkt wird auf ca. 200 °C abgekühlt und dann als Strang über ein Metallband ausgetragen und granuliert.

Der Erweichungsbereich des schwach gelbstichigen Produktes liegt bei 115-130 °C ; die relative Viskosität (1 %ige Lösung in m-Kresol, 20 °C) beträgt 1,4.

Die anwendungstechnischen Daten des Produktes sind in Tabelle 1 aufgeführt.

## Beispiel 2

Ein gemäß Beispiel 1 erhaltenes Polyesteramid wird 6 Stunden mit destilliertem Wasser von 40 °C behandelt, wobei 6,3 Gew.-% Caprolactam extrahiert werden. Das so erhaltene Polyesteramid hat einen

Erweichungsbereich von 125-140 °C. Die anwendungstechnischen Daten sind ebenfalls in Tabelle 1 aufgeführt.

Beispiel 3

7,60 kg ε-Caprolactam, 1,53 kg (9,22 Mol) Isophthalsäure, 1,83 kg (4,57 Mol) Polyethylenglykol (Molgewicht 400) und 1,03 kg (4,9 Mol) eines Amingemisches folgender Zusammensetzung

95 Gew.-% isomere Diaminodicyclohexylmethane entsprechend der Formel (1)
(davon ca. 95 % 4,4'-Isomeres,
ca. 5 % 2,4'-Isomeres,
< 1 % 2,2'-Isomeres).
5 Gew.-% isomere Dreikerntriamine entsprechend der Formel (2) werden wie in Beispiel 1 beschrieben, zu einem Polyesteramid polykondensiert.

Das Produkt wird aus der auf ca. 200 °C abgekühlten Schmelze durch ein Wasserbad abgesponnen und granuliert, anschließend mit Wasser wie in Beispiel 2 beschrieben, extrahiert. Das fast farblose Produkt hat einen Erweichungsbereich von 135-140 °C (vor der Extraktion 120-130 °C), eine relative Viskosität von 1,6 und eine Säurezahl von 11,0 mgKOH/g. Die anwendungstechnischen Prüfergebnisse sind in Tabelle 1 aufgeführt.

Beispiel 4

950 g ε-Caprolactam, 192 g (1,15 Mol) Isophthalsäure, 36 g (0,31 Mol) Hexamethylendiamin, 65 g (0,31 Mol) des in Beispiel 3 beschriebenen Amin-Gemisches und 230 g (0,575 Mol) Polyethylenglykol (Molgewicht 400) werden in einer 4 l-Glasapparatur unter $N_2$-Atmosphäre auf 200 °C aufgeheizt, 2 Stunden bei 200 °C vorkondensiert und nach dem Aufheizen auf 250 °C 6 Stunden zu Ende kondensiert. Das hellgelbe Produkt wird auf ein Blech ausgegossen, nach dem Erkalten zu Granulat zerhackt und, wie in Beispiel 2 beschrieben, mit Wasser extrahiert. Das Produkt hat eine relative Viskosität von 1,7, eine Säurezahl von 9 mg KOH/g und einen Erweichungsbereich von 145-155 °C. Die anwendungstechnischen Daten sind in Tabelle 1 aufgeführt.

Beispiel 5

Wie in Beispiel 4 beschrieben, wird ein Polyesteramid hergestellt aus

900 g ε-Caprolactam
240 g (1,64 Mol) Adipinsäure
116 g (1,0 Mol) Hexamethylendiamin
280 g (0,7 Mol) Polyethylenglykol (Molgewicht 400)

Das fast farblose Produkt hat eine Säurezahl von 9,5 mg KOH/g, eine relative Viskosität von 1,5, und einen Erweichungsbereich von 155-165 °C.
Die anwendungstechnischen Daten des Produktes sind in Tabelle 1 zusammengefaßt.

Beispiel 6

Wie in Beispiel 4 beschrieben, wird ein Polyesteramid hergestellt aus

800 g ε-Caprolactam,
202 g (1,22 Mol) Isophthalsäure,
135 g (0,64 Mol) Amingemisch von Beispiel 3 und
120 g (0,6 Mol) Polyethylenglykol (Molgewicht 200).

Das hellgelbe transparente Produkt hat nach einer Reaktionszeit von 13 Stunden bei 250 °C eine Säurezahl von 12 mg KOH/g, eine relative Viskosität von 1,6 und einen Erweichungsbereich von 110-120 °C.
Die anwendungstechnischen Daten sind in Tabelle 1 aufgeführt.

Anmerkung zur Tabelle 1

Die Fixierungszeit wurde wie folgt gemessen:
1 Tropfen der auf 200 °C erhitzten Produktschmelze wird auf ein Ende eines 100 × 20 × 3 mm großen Prüfkörpers gegeben, der aus einem mit Schleifband der Körnung 40 in Längsrichtung gerauhten handelsüblichen Naturkautschuk-Vulkanisat mit der Shore-Härte 92 besteht.

Unmittelbar danach wird das andere Ende des Prüfkörpers von Hand auf die mit Polymerschmelze beschichtete Seite gepreßt.

Durch Herstellung mehrerer Klebungen bei unterschiedlich langen Preßzeiten wird die Zeit in Sekunden bestimmt, nach welcher die Klebung der Eigenspannung des Prüfkörpers widersteht und sich nicht mehr ablöst.

Tabelle 1

Anwendungstechn. Eigenschaften der in den Beispielen 1-6 beschriebenen Schmelzklebrohstoffe

| Produkt aus Beispiel | Viskosität(*) bei 200 °C (Pas) | Fixierungszeit (sec) | Zugfestigkeit nach DIN 53504 (MPa) |
|---|---|---|---|
| 1 | 4 | 4 | 12,9 |
| 2 | 15 | 3 | 16,7 |
| 3 | 42 | 2 | 15,4 |
| 4 | 26 | 2 | 11,3 |
| 5 | 18 | 3 | 8,9 |
| 6 | 5 | 2 | 13,5 |

(*) Gemessen mit einem Brookfield-Viskosimeter RVT, Spindel 7, 10 UpM

**Ansprüche**

1. Estermodifizierte Polyamide, die 50 bis 80 Gew.-% an $—HN—(CH_2)_5—CO$-Einheiten enthalten, erhalten durch Umsetzung von

I. 50-80 Gew.-% ε-Caprolactam und
II. 20-50 Gew.-% eines Gemisches aus

a) aliphatischen oder aromatischen $C_6$-$C_{10}$-Dicarbonsäuren,
b) primären aliphatischen und/oder cycloaliphatischen $C_6$-$C_{25}$-Diaminen und
c) Polyalkylenglykolen mit einem Molgewicht von 200-1 000,

wobei die Summe von I und II 100 Gew.-% beträgt und, bezogen auf die Komponente a, 0,5-0,9 Äquivalente der Komponente b und 0,1-0,5 Äquivalente der Komponente c eingesetzt werden und die Summe der Komponenten b und c 0,95-1,05 Äquivalente beträgt.

2. Polyesteramide gemäß Anspruch 1 aus

I. 55-70 Gew.-% ε-Caprolactam und
II. 30-45 Gew.-% eines Gemisches der Komponenten a)-c).

3. Polyesteramide gemäß Anspruch 1 und 2, wobei als Komponente IIa) Isophthalsäure und/oder Adipinsäure eingesetzt werden.

4. Polyesteramide gemäß Anspruch 1 und 2, wobei als Komponente IIb) Hexamethylendiamin und/oder hydrierte technische Diaminodiphenylmethan-Gemische eingesetzt werden, die mindestens 75 % 4,4'-Diaminodicyclohexylmethan enthalten und bis zu 10 Mol-% an Dreikerntriaminen der Formel (I) enthalten können.

5. Polyesteramide gemäß Anspruch 1 und 2, wobei als Komponente IIc) Polyethylenglykole mit einem Molgewicht von 200-600 eingesetzt werden.

6. Polyesteramide gemäß Anspruch 1 aus

I. 60-70 Gew.-% ε-Caprolactam und
II. 30-40 Gew.-% eines Gemisches aus

a) 1 Äquivalent Isophthalsäure,
b) 0,5-0,9 Äquivalenten hydrierte technische Diaminodiphenylmethan-Gemische, die mindestens 75 % der 4,4'-Isomeren und bis zu 10 Mol-% Dreikerntriamine der Formel (I) enthalten und
c) 0,1-0,5 Äquivalenten Polyethylenglykol mit einem Molgewicht von 200-400,

wobei die Summe von b) und c) 1 Äquivalent und die Summe aus I und II 100 Gew.-% beträgt.

7. Verwendung der Polyesteramide gemäß Anspruch 1-6 als Schmelzklebrohstoffe.

## Claims

1. Ester-modified polyamides containing 50 to 80 % by weight of $—HN—(CH_2)_5—CO$-units, obtained by the reaction of

I. from 50 to 80 % by weight of ε-caprolactam, and
II. from 20 to 50 % by weight of a mixture of

a) aliphatic or aromatic $C_6$-$C_{10}$-dicarboxylic acids,
b) primary aliphatic and/or cycloaliphatic $C_6$-$C_{25}$-diamines, and
c) polyalkylene glycols having a molecular weight of from 200 to 1 000,

wherein the sum of I and II = 100 % by weight and, based on component a), from 0.5 to 0.9 equivalents of component b) and from 0.1 to 0.5 equivalents of component c) are used, and the sum of components b) and c) is 0.95 to 1.05 equivalents.

2. Polyester amides according to claim 1, composed of

I. from 55 to 70 % by weight of ε-caprolactam, and
II. from 30 to 45 % by weight of a mixture of components a) to c).

3. Polyester amides according to claims 1 and 2, wherein isophthalic acid and/or adipic acid is used as component IIa).

4. Polyester amides according to claims 1 and 2, wherein hexamethylenediamine and/or hydrated commercial diaminodiphenylmethane mixtures which contain at least 75 % of 4,4'-diaminodicyclohexylmethane and can obtain up to 10 mole % of trinuclear triamines corresponding to formula (I) are used as component IIb).

5. Polyester amides according to claims 1 and 2, wherein polyethylene glycols having a molecular weight of from 200 to 600 are used as component IIc).

6. Polyester amides according to claim 1, composed of

I. from 60 to 70 % by weight of ε-caprolactam, and
II. from 30 to 40 % by weight of a mixture of

a) 1 equivalent of isophthalic acid,
b) from 0.5 to 0.9 equivalents of hydrated commercial diaminodiphenylmethane mixtures containing at least 75 % of 4,4'-isomers and up to 10 mole % of trinuclear triamines corresponding to formula (I), and
c) from 0.1 to 0.5 equivalents of polyethylene glycol having a molecular weight of from 200 to 400,

wherein the sum of b) and c) is one equivalent and the sum of I and II is 100 % by weight.

7. The use of the polyester amides according to claims 1 to 6 as raw materials for fusible adhesives.

## Revendications

1. Polyamides modifiées par des esters, qui contiennent 50 à 80 % en poids d'unités $—HN—(CH_2)_5—CO—$, obtenues par réaction de

I. 50-80 % en poids d'ε-caprolactame et
II. 20-50 % en poids d'un mélange

a) d'acides dicarboxyliques en $C_6$-$C_{10}$ aliphatiques ou aromatiques,
b) de diamines en $C_6$-$C_{25}$ primaires aliphatiques et/ou cycloaliphatiques et
c) de polyalcoylène glycols ayant un poids moléculaire de 200-1 000,

la somme de I et de II s'élevant à 100 % en poids et, par rapport au composant a, 0,5-0,9 équivalent du composant b et 0,1-0,5 équivalent du composant c étant utilisé et la somme des composants b et c s'élevant à 0,95-1,05 équivalent.

2. Polyesteramides selon la revendication 1 au départ de

I. 55-70 % en poids d'ε-caprolactame et
II. 30-45 % en poids d'un mélange des composants a)-c).

3. Polyesteramides selon les revendications 1 et 2 où comme composant IIa) on utilise de l'acide isophtalique et/ou de l'acide adipique.

4. Polyesteramides selon les revendications 1 et 2, où comme composant IIb) on utilise de l'hexaméthylène diamine et/ou des mélanges de diaminodiphénylméthanes techniques hydrogénés qui

contiennent au moins 75 % de 4,4'-diaminodicyclohexylméthane et qui peuvent contenir jusqu'à 10 moles % de triamines trinucléaires de formule (I).

5. Polyesteramides selon les revendications 1 et 2, où comme composant IIc) on utilise des polyéthylène glycols ayant un poids moléculaire de 200 à 600.

6. Polyesteramides selon la revendication 1 au départ de

I. 60-70 % en poids d'ε-caprolactame et de
II. 30-40 % en poids d'un mélange

a) de 1 équivalent d'acide isophtalique,

b) de 0,5-0,9 équivalent de mélanges de diaminodiphénylméthanes techniques hydrogénés qui contiennent au moins 75 % de l'isomère 4,4' et jusqu'à 10 moles % de triamines trinucléaires de formule (I) et

c) de 0,1-0,5 équivalent de polyéthylène glycol ayant un poids moléculaire de 200-400,

la somme de b) et de c) s'élevant à 1 équivalent et la somme de I et de II à 100 % en poids.

7. Utilisation des polyesteramides selon les revendications 1 à 6 comme matières premières pour adhésifs à fondre.